# EUROPEAN PATENT SPECIFICATION

(11) **EP 2 982 250 B1**
(45) Date of publication and mention of the grant of the patent: **21.11.2018**
(21) Application number: 14780255.7
(22) Date of filing: 26.03.2014
(51) Int. Cl.: A23G 1/00, A23G 1/30, A23G 1/54, A23G 3/00, A23G 3/34

(54) **BAR- OR STICK-TYPE FOOD AND PROCESS FOR PRODUCING SAME**
STANGEN- ODER STIFTFÖRMIGE NAHRUNGSMITTEL UND VERFAHREN ZUR HERSTELLUNG
ALIMENT DE TYPE BARRE OU STICK ET PROCÉDÉ DE PRODUCTION CORRESPONDANT

(30) Priority: 04.04.2013 JP 2013079005
(43) Date of publication of application: 10.02.2016
(73) Proprietor: Lotte Co., Ltd., Tokyo 160-0023 (JP)
(72) Inventor: TAMURA, Ikuo, Saitama-shi Saitama 336-8601 (JP); WATANABE, Shingo, Saitama-shi Saitama 336-8601 (JP); AIHARA, Takeshi, Saitama-shi Saitama 336-8601 (JP); ASHITANI, Hiroaki, Saitama-shi Saitama 336-8601 (JP)
(74) Representative: Witte, Weller & Partner Patentanwälte mbB
(86) International application number: PCT/JP2014/058534
(87) International publication number: WO 2014/162948

(56) References cited:
- WO-A1-2012/039336
- JP-A- H0 630 740
- JP-A- H04 346 755
- M. Gray: "Chapter 14: Moulding, enrobing and cooling chocolate products", Industrial Chocolate Manufacture and Use, 1 October 2009 (2009-10-01), pages 320-357, XP055309782, Retrieved from the Internet: URL:http://site.ebrary.com/lib/epo/printPa ge.action?op=toPDF&ct=MLA&rds=chapter&docI D=10301305&st=352&ed=389&dt=1476257833459 [retrieved on 2016-10-12]
- 'Cheesecake Matsuri Dai Ni Dan?... Sanso? Hen' 27 March 2012, XP055287613 Retrieved from the Internet: <URL:http://blogs.yahoo.co.jp/peppermintpat ty118/8843012.html> [retrieved on 2014-06-24]

## Description

### TECHNICAL FIELD

The present invention relates to a bar- or stick-type food item and a method for producing the same, and particularly, to a bar- or stick-type food item which is a sweet stuff and more particularly is a chocolate food item, and a method for producing the same.

### BACKGROUND ART

A prior art related to the present invention is "a method for producing a chocolate confectionery having a plurality of layers" described in JP H03 103144 A.

The method for producing a chocolate confectionery described in JP H03 103144 A is "a method for producing a chocolate confectionery having a plurality of layers by filling two or more kinds of chocolate ingredients into a die member having a concave shape to produce the chocolate confectionery having a plurality of layers, comprising steps of:
(1) installing a removable die into the die member, filling one chocolate ingredient, and cooling the one chocolate ingredient to be hardened;
(2) removing the removable die from the die member to expose an end face of the one chocolate ingredient;
(3) blowing heated air from an outside to the exposed end face to fuse the end face; and
(4) filling other chocolate ingredient into the die member to be cooled and hardened." (See descriptions of claims, and FIG.3 and its descriptions in JP H03 103144 A.)

Document "Cheese Cake Matsuri Dai Ni Dan?... Sanso? Hen", 27 March 2012 (2012-03-27), XP055287613 discloses the manufacture of a three-layered cheese cake, by introducing half of a batter to a base comprising plain cookies and melted butter, and baking briefly, followed by pouring the batter to which powdered green tea has been added from above and a further baking step. Document JP H04 346755 A discloses a foamed green-filled chocolate preparation, obtainable by charging foamed cream into a chocolate shell and removing the excess with a scraper.

Document WO 2012/039336 A1 discloses a method for producing a center-filled chocolate product. Finally, document M. Gray: "Chapter 14: Moulding, Enrobing and Cooling Chocolate Products", Industrial Chocolate Manufacturer and Use, 1 October 2009 (2009-10-01), pages 320-357, XP055309782 teaches that a shell can be formed which is filled to create a more interesting eating experience.

### SUMMARY OF INVENTION

### PROBLEM TO BE SOLVED BY INVENTION

As an example of food items, a bar- or stick-type product in sweet stuffs has advantages derived from a shape such as "satisfaction which is felt when eating one product" and "easiness of carrying with." At the same time, it has a disadvantage that it needs to be eaten up at a time since interruption is difficult after starting eating and keeping a half-eaten stuff is also difficult.

While a conventional bar- or stick-type product has these characteristics, it has been also pointed out that "taste" and/or "texture" of a conventional bar- or stick-type product are uniform, and therefore, that a person becomes tired of eating it before eating it up.

While a chocolate food item produced according to the method of production in above-described patent document 1 is a chocolate food item having a plurality of layers, its entire shape is not a bar or stick.

Therefore, the method of production is difficult to apply to a bar- or stick-type food item.

The present invention has been achieved under such circumstances, and aims at providing a food item with "satisfaction which is felt when eating one product" and "easiness of carrying with" of a bar- or stick-type food item, and at the same time, with a new value of change of "taste" and/or "texture" which prevents a person from becoming tired of eating it before eating it up.

### SOLUTION TO PROBLEM

The above object is solved by a method for producing a bar- or stick-type food item according to claim 1.

A bar- or stick-type elongated food item has a bar or stick shape, wherein two or more kinds of food item ingredients are combined in an inclined shape in a longitudinal direction of the food item, and thereby taste and/or texture is changed based on a change of ratio of the food item ingredients combined in the inclined shape when the food item is eaten from one end to the other end thereof.

Preferably, two kinds of food item ingredients are combined in an inclined shape, and % by weight of each of the food item ingredients is set within a range between 5 to 95 % of the entire food item.

Preferably, the food item includes a chocolate food item, and the two kinds of food item ingredients include different kinds of chocolates.

Preferably, the food item is covered with a shell which forms an outer shell formed of the food item ingredient,

A method for producing a bar- or stick-type food item comprises the steps of: preparing a die having an elongated containing recess which has a bar or stick shape and an opened upper surface; loading a first food item ingredient which is viscous and mobile near one longitudinal end side of the containing recess of the prepared die; vibrating the die to move the loaded first food item ingredient from the one longitudinal end side of the containing recess to the other end side in an inclined shape; filling a second food item ingredient into an empty area of the containing recess of the die where the first food item ingredient is not present; and performing removal such that an upper surface of the second food item ingredient is along the opened upper surface of the containing recess so that the upper surface of the second food item ingredient filled into the containing recess of the die becomes flat.

Preferably, the method for producing a bar- or stick-type food item comprises a step of forming the shell along an inner wall surface of the containing recess before the first food item ingredient is loaded.

Preferably, the method for producing a bar- or stick-type food item, instead of removing, comprises steps of: vibrating the die to make flat the upper surface of the second food item ingredient after the second food item ingredient is filled; and covering the upper surface of the second food item ingredient with a food item ingredient for forming the shell.

Preferably, the method further comprises a step of vibrating the die to make flat the covering food item ingredient for forming the shell after being covered by the food item ingredient for forming the shell.

### ADVANTAGEOUS EFFECTS OF INVENTION

According to the invention of claim 1, in a bar- or stick-type (this indicates an elongated shape in a bar or stick shape) food item, two or more food item ingredients are combined in an inclined shape in a longitudinal direction of the food item. Therefore, when eating is started from one end of the food item, a ratio of the food item ingredients combined in the inclined shape changes according to progress of the eating, and taste and/or texture during the eating changes.

Additionally, the phrase "inclined shape" indicates that one food item ingredient and the other food item ingredient are combined generally obliquely by abutment, joining or the like. Surfaces combined obliquely may be jagged or bowed, and may be combined generally obliquely as a whole.

Accordingly, a bar- or stick-type food item can be provided with a new value of change of taste and/or texture which prevents a person from becoming tired of eating the food item from the start to the end of eating the food item.

Further, the food item is an elongated bar or stick type in a bar or stick shape. Therefore, while the "satisfaction which is felt when eating one product" and the "easiness of carrying with" which a food item in such a form has are retained, a food item which adds to such features the above-described new value of change of taste and/or texture can be obtained.

The change of taste and/or texture can be preferably provided by setting % by weight of each food item ingredient within 5 to 95 % of the entire food item.

A new eating situation can be proposed by providing bar- or stick-type chocolate with the new value of the change of taste and/or texture, thereby to contribute to activation of a sweet stuff market.

The food item can be covered with the shell. Therefore, a food item which can surprise an eater is obtained since change of taste and/or texture can be enjoyed during eating while an outer shape of the food item is a bar or stick type similar to conventional products.

There can be provided a production method by which the bar- or stick-type food item can be efficiently and stably produced.

In particular, the first food item ingredient is viscous and mobile. Therefore, it is not needed to use a punching die such as what is described in the prior art section, and it becomes possible to fill the first food item ingredient in an inclined shape in the containing recess of the die by incorporating a simple and easy production process of vibrating the die.

Further, when the food item is a chocolate food item and the food item ingredients are different kinds of chocolates, these chocolates can be combined in an inclined shape in a longitudinal direction of the food item while they are kept in a melted state after tempering. Therefore, a delicious chocolate food item whose taste is improved can be produced while omitting a process such as partial melting of each chocolate ingredient in a production step for combination.

The bar- or stick-type food item can be easily produced.

A bar- or stick-type food item covered with a shell can be also easily produced.

### BRIEF DESCRIPTION OF DRAWINGS

FIG. 1 is a perspective view of a bar- or stick-type chocolate food item 1 according to a first embodiment of the present invention.
FIG. 2 is a perspective view of a bar- or stick-type chocolate food item 10 according to a second embodiment of the present invention.
FIG. 3 is a perspective view of a bar- or stick-type chocolate food item 20 according to a third embodiment of the present invention.
FIG. 4 is a drawing for explaining a method for producing the bar- or stick-type chocolate food item 1 according to the first embodiment of the present invention.
FIG. 5 is a drawing for explaining a method for producing the bar- or stick-type chocolate food item 10 according to the second embodiment of the present invention.
FIG. 6 is a drawing for explaining a method for producing the bar- or stick-type chocolate food item 20 according to the third embodiment of the present invention.

### DESCRIPTION OF EMBODIMENT

Referring to drawings, embodiments of the present invention are specifically describe below.

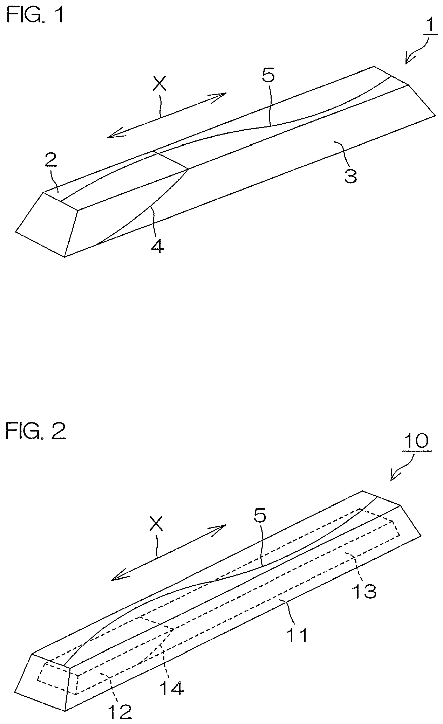

FIG. 1 is a perspective view of a bar- or stick-type chocolate food item (hereinafter also referred to as "stick chocolate") 1 according to a first embodiment of the present invention.

The stick chocolate 1 is in a bar or stick shape and is elongated, is in a rectangular parallelepiped shape whose section has a trapezoid shape whose bottom side is a little bit wider, and is elongated in an arrow X direction. As an example of dimensions, a length in a longitudinal direction is approximately 100 mm, a length of an upper side of a trapezoid section is approximately 8.5 mm, a length of a lower side is approximately 11 mm, and a height is approximately 6 mm. A weight is approximately 7.0 g, for example. The stick chocolate 1 is configured by combining a first chocolate 2 and a second chocolate 3 in an inclined shape 4 in the longitudinal direction, that is, in the X direction. If needed, an elongated upper surface of the stick chocolate 1 may have a pattern line 5 which is extended in its length direction (X direction) and is gently bowed. The pattern line 5 may be formed by a small reverse ridge.

The stick chocolate 1 is usually wrapped individually. When the wrapping is peeled, the first chocolate 2 and the second chocolate 3 combined in the inclined shape 4 in the longitudinal direction (X direction) can be observed from an outside as shown in FIG. 1. In the stick chocolate 1, the first chocolate 2 and the second chocolate 3 are different in color. The first chocolate 2 is green or pink, and the second chocolate 3 is brown (chocolate color). This provides the stick chocolate 1 with a novel color impression which can visualize change of colors.

Further, when an eater holds, for example, a right end (right end in FIG. 1) of the stick chocolate 1 and starts eating at a left end of the stick chocolate 1, the eater can enjoy taste and texture of the first chocolate 2 at the first bite, and at the second bite where a portion of the inclined shape 4 is eaten, the eater can enjoy taste and texture in which the first chocolate 2 and the second chocolate 3 are mixed. Moreover, by continuing eating, change of taste and texture can be enjoyed such that taste and texture of the second chocolate 3 such as taste and texture of a strong chocolate can be enjoyed at the third bite, which is followed by the fourth bite. When the stick chocolate 1 is eaten from the opposite end, change of taste and texture in the opposite direction can be enjoyed.

FIG. 2 is a perspective view of a chocolate food item (stick chocolate) 10 according to a second embodiment of the present invention, and shows its inner configuration by broken lines.

The stick chocolate 10 has an outer shape as approximately the same as an outer shape of the stick chocolate 1 according to the first embodiment, and has a pattern line 5 on its upper surface according to need.

The outer shape of the stick chocolate 10 is covered by a shell chocolate 11. In an inside of the shell chocolate 11, two types of chocolates, that is, a first chocolate 12 and a second chocolate 13, are combined and filled in an inclined shape 14 in an X direction.

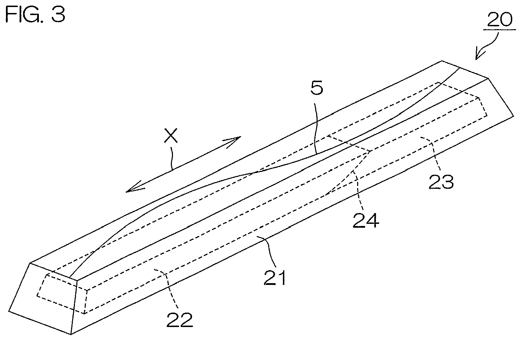

FIG. 3 is a perspective view of a chocolate food item (stick chocolate) 20 according to a third embodiment of the present invention, and shows its inner configuration by broken lines.

The stick chocolate 20 has a bar or stick shape elongated in an arrow X direction, has an outer shape as approximately the same as the outer shape of the stick chocolate 1 according to the first embodiment and the outer shape of the stick chocolate 10 according to the second embodiment, and has a pattern line 5 on its upper surface according to need. As an example of dimensions, a length in a longitudinal direction is approximately 130 mm, a length of an upper side of a trapezoid section is approximately 10 mm, a length of a lower side is approximately 13 mm, and a height is approximately 8 mm. A weight is approximately 15.5 g, for example. An outer shell of the stick chocolate 20 is covered by a shell chocolate 21. In the shell chocolate 21, a first chocolate 22 elongated in the X direction and a second sweet stuff material 23 formed of a center paste are combined and filled in an inclined shape 24.

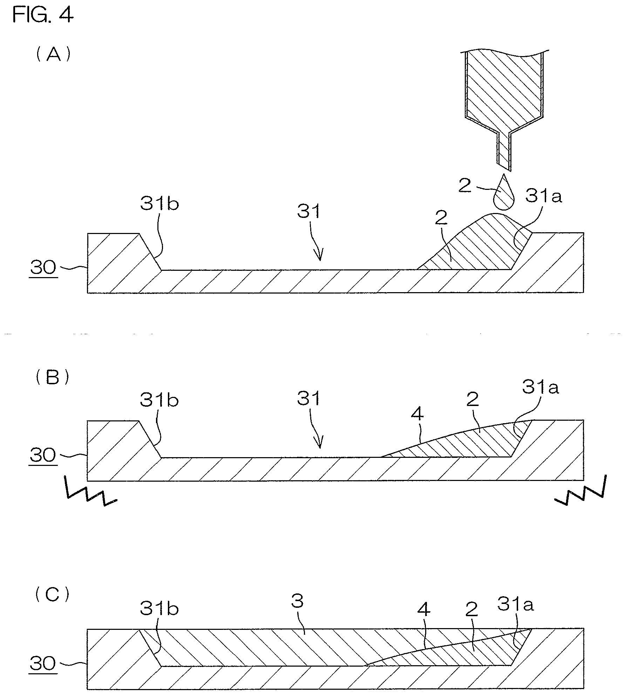

FIG. 4 is a drawing for explaining a method for producing the bar- or stick-type chocolate food item (stick chocolate) 1 according to the above first embodiment. Referring to FIG. 4, the method for producing the stick chocolate 1 is explained.

First, a die 30 is prepared. The die 30 is a metal mold, for example, and has a containing recess 31 which has a bar or stick shape and is elongated, and whose upper surface is opened. The containing recess 31 is a recess for forming the stick chocolate 1, and has the same shape as an outer shape of the stick chocolate 1 (however, its upper and lower sides are reversed compared to the stick chocolate 1). The opened upper surface corresponds to a bottom surface of the stick chocolate 1.

The first chocolate, that is, for example, the seasoned chocolate 2 seasoned with predetermined taste (for example, green powdered tea chocolate or strawberry chocolate) is loaded into the containing recess 31 of the die 30. That is, the tempered first chocolate (seasoned chocolate) 2 in a melted state is loaded near one longitudinal end of the containing recess 31. In other words, a tempered chocolate in a melted state is filled near the one longitudinal end of the containing recess 31 of the die 30. Filling of the melted chocolate is performed such that a discharging nozzle goes across between one longitudinal end side 31a of the containing recess 31 of the die 30 and a longitudinal center portion to make a portion near the one end side 31a a peak of a mass. The chocolate that was filled is viscous and mobile (FIG. 4(A)).

Then the die 30 is vibrated. As a result of this vibration, the first chocolate (seasoned chocolate) 2 filled in the containing recess 31 moves and flows slowly from the one longitudinal end side 31a of the containing recess 31 to the other end side 31b obliquely downwardly, thereby to extend within the containing recess 31. That is, the first chocolate 2 expands in a state where its upper surface is in the inclined shape 4 with the one end side within the containing recess 31 kept as a starting point. (FIG. 4(B))

Next, depending on characteristics of the extended first chocolate 2, the die 30 is cooled according to need. Then, the second chocolate 3 (for example, sepia chocolate) is filled into an empty area of the containing recess 31 of the die 30 where the first chocolate 2 is not present. As a result, the containing recess 31 is filled with the first chocolate 2 and the second chocolate 3. (FIG. 4(C))

Next, a removal task is performed such that an upper surface of the second chocolate 3 is along the opened upper surface of the containing recess 31 of the die 30 so that the upper surface of the second chocolate 3 becomes flat.

Then the die 30 is cooled, and the two types of chocolates are hardened within the containing recess 31, whereby the above-described chocolate food item (stick chocolate) 1 of the first embodiment is completed.

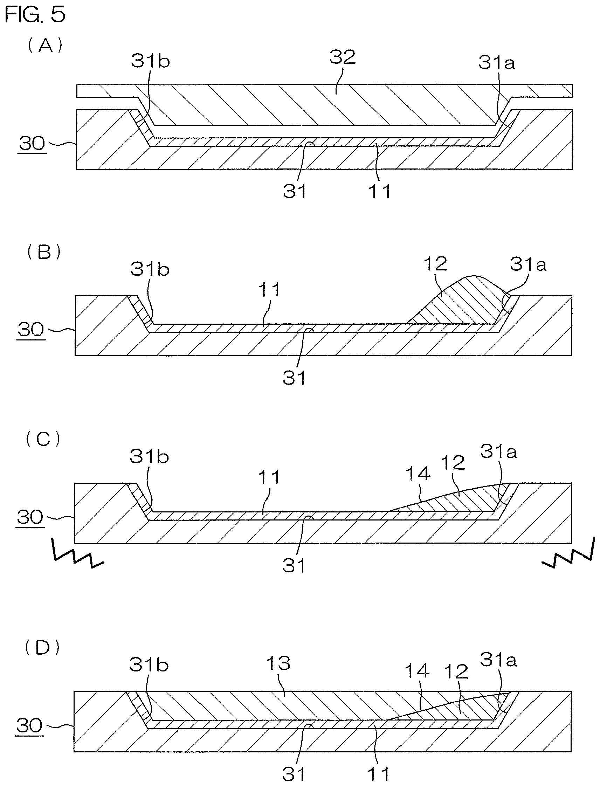

FIG. 5 is a drawing for explaining a method for producing the chocolate food item (stick chocolate) 10 according to the second embodiment.

Also in this production method, a die 30 comprising a containing recess 31 is prepared.

Then, the shell chocolate 11 is formed along an inner wall of the containing recess 31 according to a cold press production method.

While the cold press production method is already known, it is simply explained below.

A tempered melted chocolate which forms a shell is loaded into the containing recess 31, and then a pressing die 32 which is spaced from the containing recess 31 by a space of the shell is pressed into the containing recess 31. As a result, the melted shell chocolate 11 is extended along the inner wall of the containing recess 31, and is cooled and hardened. The pressing die 32 is made of a metal having a good thermal conductivity such as aluminum and copper. Since this pressing die presses the shell chocolate 11 in a cooled state, the method is called the cold press production method. (FIG. 5(A))

Next, the tempered first chocolate 12 in a melted state (this first chocolate 12 is a seasoned chocolate, and an espresso chocolate or an apple tea chocolate is shown as an example) is loaded and filled to one end side 31a of the containing recess 31 where the shell chocolate 11 is formed. (FIG. 5(B))

Next, the die 30 is vibrated, and the filled first chocolate 12 is extended. (FIG. 5(C))

Thereafter, the die 30 is cooled according to need, the second chocolate 13 is filled into an empty area of the containing recess 31, and a surface thereof is made plane by scraping. (FIG. 5(D))

Then, the entire chocolates are cooled through the die 30 and are hardened, whereby the second chocolate food item 10 is completed.

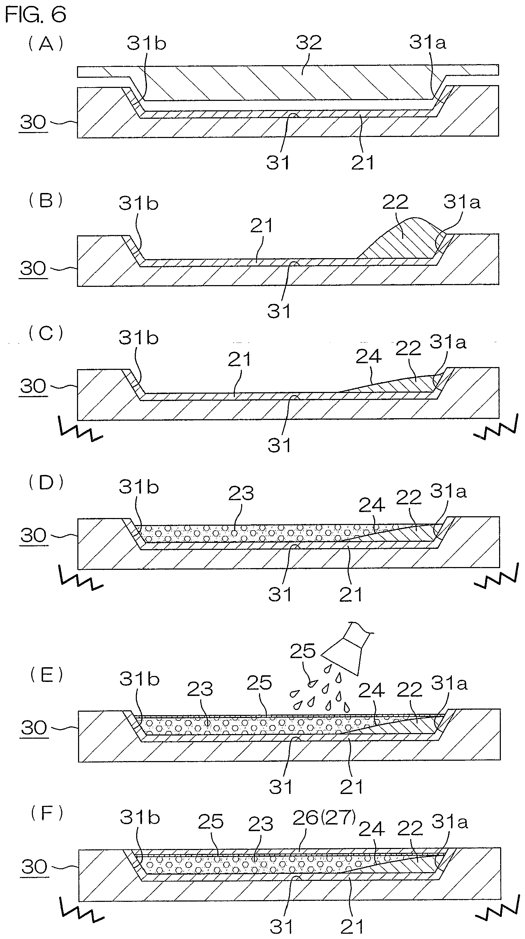

FIG. 6 is a drawing for explaining a further another production method of the present invention and shows a method for producing the chocolate food item 20 according to the third embodiment.

Similarly to the methods for producing the chocolate food item 1 according to the first embodiment and the chocolate food item 10 according to the second embodiment, a die 30 comprising a containing recess 31 is prepared.

Then, the shell chocolate 21 is formed according to the cold press production method. (FIG. 6(A))

Next, the first chocolate 22 is filled near one end 31a of the containing recess 31. (FIG. 6(B))

Then, the die 30 is vibrated to extend the first chocolate 22. (FIG. 6(C))

Thereafter, the die 30 is cooled according to need, and a center paste 23 as the second sweet stuff material configuring an inner main portion of the chocolate food item 20 is filled into an empty area of the containing recess 31. (FIG. 6(D))

Then the die 30 is vibrated again, whereby the center paste 23 expands across the empty space to be filled and extended. (FIG. 6(D))

Thereafter, a spray chocolate 25 is sprayed to a surface of the materials contained in the containing recess 31, whereby a coating is formed on a mixture of the first chocolate 22 and the center paste 23. (FIG. 6(E))

In this state, an upper surface portion of the containing recess 31 formed in the die 30 has a small space.

Therefore, a bottom chocolate 26 is filled into this portion, and the die 30 is vibrated, whereby the bottom chocolate 26 is extended to form a cover 27. (FIG. 6(F))

This cover 27 is connected in a peripheral portion thereof to the shell chocolate 21 produced by the cold press production method, whereby the chocolate food item (stick chocolate) 20 covered with the shell chocolate 21 is completed.

### EXAMPLES

### (First Example)

Following Table 1 shows specific materials of the stick chocolate 1 and weight ratios of the first chocolate 2 and the second chocolate 3 in a product weight.

**Table 1**

| (A) | | |
|---|---|---|
| Raw materials | Sepia chocolate % by weight | |
| Cacao mass | 20.0 | |
| Whole milk powder | 20.0 | |
| Sugar | 40.0 | |
| Cocoa butter | 10.0 | |
| Vegetable oil and fat | 10.0 | |
| Lecithin | Less than 0.5 | |
| Total | 100.0 | |

| (B) | | |
|---|---|---|
| Raw materials | Green powdered tea chocolate % by weight | Strawberry chocolate % by weight |
| Sugar | 17.0 | 17.0 |
| Whole milk powder | 20.0 | 20.0 |
| Cocoa butter | 27.0 | 27.0 |
| Vegetable oil and fat | 16.0 | 15.0 |
| Lactose | 15.0 | 18.0 |
| Green tea powder | 5.0 | |
| Strawberry FD | | 3.0 |
| Pigment | Less than 0.5 | Less than 0.5 |
| Lecithin | Less than 0.5 | Less than 0.5 |
| Total | 100.0 | 100.0 |

| (C) | | |
|---|---|---|
| Product ratio <green powdered tea> | | |
| | g | % by weight |
| Green powdered tea chocolate | 1.5 | 21.4 |
| Sepia chocolate | 5.5 | 78.6 |
| Total | 7.0 | 100.0 |

| (D) | | |
|---|---|---|
| Product ratio <strawberry> | | |
| | g | % by weight |
| Strawberry chocolate | 5.0 | 71.4 |
| Sepia chocolate | 2.0 | 28.6 |
| Total | 7.0 | 100.0 |

Table 1(B) shows constituent components of the first chocolate 2 in the stick chocolate 1.

A green powdered tea chocolate or a strawberry chocolate can be used as the first chocolate 2.

Raw materials of the green powdered tea chocolate or the strawberry chocolate are as shown in Table 1(B).

A sepia chocolate can be used as the second chocolate 3 of the stick chocolate 1. Raw materials of the sepia chocolate are as shown in Table 1(A).

The ratio between the first chocolate 2 and the second chocolate 3 in the stick chocolate 1 are as shown in Table 1(C) or (D).

### (Second Example)

Table 2 shows raw materials and composition ratios of the chocolate food item (stick chocolate) 10 according to the second embodiment.

**Table 2**

| (A) | | |
|---|---|---|
| Raw materials | Shell chocolate/ filled chocolate % by weight | Espresso chocolate % by weight |
| Cacao mass | 20.0 | 50.0 |
| Whole milk powder | 20.0 | 5.0 |
| Sugar | 40.0 | 25.0 |
| Cocoa butter | 10.0 | |
| Vegetable oil and fat | 10.0 | 10.0 |
| Coffee | | 10.0 |
| Lecithin | Less than 0.5 | Less than 0.5 |
| Total | 100.0 | 100.0 |

| (B) | | |
|---|---|---|
| Raw materials | Apple tea chocolate % by weight | |
| Sugar | 20.0 | |
| Whole milk powder | 15.0 | |
| Cocoa butter | 40.0 | |
| Lactose | 22.0 | |
| Black tea powder | 3.0 | |
| Pigment | Less than 0.5 | |
| Lecithin | Less than 0.5 | |
| Total | 100.0 | |

| (C) | | |
|---|---|---|
| Product ratio <espresso> | | |
| | g | % by weight |
| Shell chocolate | 3.5 | 50.0 |
| Espresso chocolate | 1.5 | 21.4 |
| Filled chocolate | 2.0 | 28.6 |
| Total | 7.0 | 100.0 |

| (D) | | |
|---|---|---|
| Product ratio <apple tea> | | |
| | g | % by weight |
| Shell chocolate | 3.5 | 50.0 |
| Apple tea chocolate | 1.5 | 21.4 |
| Filled chocolate | 2.0 | 28.6 |
| Total | 7.0 | 100.0 |

In the stick chocolate 10 according to the second embodiment, the shell chocolate 11 and the second chocolate (a center chocolate and the bottom chocolate) 13 are formed with the same compositions.

As shown in Table 2(A) and (B), an espresso chocolate or an apple tea chocolate is used for the first chocolate 12 according to products.

A product ratio of the shell chocolate 11, the espresso chocolate (the first chocolate 12), and the center/bottom chocolates (the second chocolate 13) is as in Table 2(C). A product ratio of the shell chocolate, the apple tea chocolate (the first chocolate 12), and the center/bottom chocolates (the second chocolate 13) is as in Table 2(D).

### (Third Example)

Table 3 shows component ratios of the chocolate food item (stick chocolate) 20 according to the third embodiment.

**Table 3**

| (A) | | | |
|---|---|---|---|
| Raw materials | Shell/bottom chocolates % by weight | Center chocolate % by weight | Spray chocolate % by weight |
| Cacao mass | 20.0 | 20.0 | 12.0 |
| Whole milk powder | 20.0 | 15.0 | 10.0 |
| Cocoa butter | 10.0 | 8.0 | 20.0 |
| Vegetable oil and fat | 10.0 | 22.0 | 33.0 |
| Sugar | 40.0 | 35.0 | 25.0 |
| Lecithin | Less than 0.5 | Less than 0.5 | Less than 0.5 |
| Total | 100.0 | 100.0 | 100.0 |

| (B) | | | |
|---|---|---|---|
| Product ratio | | | |
| | | g | % by weight |
| Shell/bottom chocolates | | 6.0 | 38.7 |
| Center chocolate | | 5.0 | 32.3 |
| Center paste | | 4.0 | 25.8 |
| Spray chocolate | | 0.5 | 3.2 |
| Total | | 15.5 | 100.0 |

Table 3(A) shows raw material ratios of the shell chocolate 21 and the bottom chocolate 26, a raw material ratio of a center raw chocolate (the first chocolate 22), and a raw material ratio of the spray chocolate 25. Table 3(B) shows a product ratio.

Results of organoleptic evaluations on Examples of the present invention are shown below.
(1) After having fifty general consumers eat respectively two kinds of chocolates of the stick chocolate 10 (using an espresso chocolate) produced in second Example and a comparison chocolate produced by the same die of second Example and comprising 100.0 % of a shell chocolate (having the same composition of the filled chocolate) as a composition, a survey was made about two points: (I) if they felt change of taste and enjoyment; and (II) if they felt refreshed. Table 4 below shows results.

**Table 4**

| | (I) Ratio of who felt change of taste and enjoyment | (II) Ratio of who felt refreshed |
|---|---|---|
| Comparison chocolate | 18.9% | 3.8% |
| Chocolate of second Example | 98.1% | 48.1% |

Table 4 shows that in case of eating the chocolate of second Example, clearly more people (I) felt change of taste and enjoyment and (II) felt refreshed compared to the case of eating the comparison chocolate.
(2) The stick chocolate 1 (using a strawberry chocolate) produced in first Example and a comparison chocolate 1 produced by the same die of first Example and comprising 100.0 % of a sepia chocolate as a composition were respectively prepared. Further, using the same die of first Example and the same compositions, a comparison chocolate 2 produced by horizontally placing a filled strawberry chocolate in the die and then filling and horizontally placing a sepia chocolate thereon was prepared. After having five trained professional panelists eat respectively these three kinds of chocolates, evaluations were made about three points: (I) if they felt enjoyment of taste; (II) if they felt enjoyment of texture; and (III) if they felt refreshed after eating. The evaluations of the "enjoyment of taste," the "enjoyment of texture" and the "refreshment after eating" were made in five grades: 5 shows "was greatly felt"; 4 shows "was rather felt"; 3 shows "undecidable"; 2 shows "was little felt"; and 1 shows "was hardly felt." Table 5 below shows results.

**Table 5**

| (I) Enjoyment of taste | | | | | | |
|---|---|---|---|---|---|---|
| | Panel 1 | Panel 2 | Panel 3 | Panel 4 | Panel 5 | Average |
| Chocolate of first Example | 4 | 5 | 5 | 4 | 3 | 4.2 |
| Comparison chocolate 1 | 2 | 2 | 2 | 1 | 2 | 1.8 |
| Comparison chocolate 2 | 3 | 2 | 2 | 1 | 2 | 2.0 |

| (II) Enjoyment of texture | | | | | | |
|---|---|---|---|---|---|---|
| | Panel 1 | Panel 2 | Panel 3 | Panel 4 | Panel 5 | Average |
| Chocolate of first Example | 4 | 3 | 4 | 4 | 4 | 3.8 |
| Comparison chocolate 1 | 2 | 2 | 1 | 1 | 1 | 1.4 |
| Comparison chocolate 2 | 2 | 1 | 3 | 2 | 2 | 2.0 |

| (III) Refreshment after eating | | | | | | |
|---|---|---|---|---|---|---|
| | Panel 1 | Panel 2 | Panel 3 | Panel 4 | Panel 5 | Average |
| Chocolate of first Example | 3 | 4 | 5 | 4 | 5 | 4.2 |
| Comparison chocolate 1 | 1 | 2 | 2 | 1 | 2 | 1.6 |
| Comparison chocolate 2 | 2 | 2 | 2 | 2 | 3 | 2.2 |

Table 5 shows that in case of eating the chocolate of first Example, clearly higher evaluations were obtained about all of the points of (I) enjoyment of taste, (II) enjoyment of texture and (III) refreshment after eating when compared to the cases of eating the comparison chocolates 1 and 2. Further, after eating the chocolate of first Example, the professional panelists gave evaluations such as "feeling that the brain is activated is obtained," "feeling of being awakened is obtained," and "an uplifting feeling can be obtained because of surprise resulting from non-conventional taste and texture.

The present invention is not limited to the above-described embodiments, but can be modified variously in design within the scope of the claims.

For example, the bar- or stick-type food item of the present invention is not limited to one where two kinds of food items are combined in an inclined shape, but may be ones where three or more kinds (such as three or four kinds) of food items are combined in an inclined shape. In this case, a food item having an unprecedented taste and/or texture whose change of the taste and/or texture is much richer in variation can be obtained.

Further, food items configuring the bar- or stick-type food item of the present invention are not limited to what are shown in Examples such as chocolate and paste, but various things may be used in combination, including western confectioneries such as biscuit, cracker, cookie, sponge cake, pie, doughnut, waffle, bread, pudding, butter cream, custard cream, cream puff, caramel, nougat, hard candy, soft candy, gummy candy and tablet confectionery, Japanese confectioneries such as adzuki-bean jelly, soft adzuki-bean jelly, kingyoku, jelly, castella (Japanese sponge cake), candy, rice cracker, cubic rice cracker, millet brittle, gyuhi, rice cakes, steamed bun, sweet rice jelly and bean pastes, pastes such as flour paste, peanut paste and fruit paste, processed food items of fruits and vegetables such as marmalade, jam and things preserved in syrup, syrups such as fruit preserved in syrup and korimitsu, meat products such as ham and sausage, fish meat products such as fish meat ham, fish meat sausage, boiled fish paste, Japanese fish sausage and tempura, delicacies such as vinegar kelp, split dried cuttlefish, and mashed and seasoned fish of cod, sea bream, shrimp and the like, foods boiled in soy sauce made of konjac, dried seaweed, dried cuttlefish, little fish, shellfish and the like, alcoholic beverages such as synthetic sake, ginjoshu, fruit liquor, western liquor and rice wine, and refreshing drinks such as coffee, chocolate, juice, carbonated drinks and lactobacillus beverages.

Further, the shape of the bar- or stick-type food item of the present invention is not limited to the rectangular parallelepiped shape whose section has a trapezoid shape as shown in FIGS. 1 to 3, but may be a rectangular parallelepiped shape whose section has a square, rectangle, diamond or irregular quadrangle shape. Further, the shape may be a triangular prism, a pentagonal prism, a hexagonal prism and prisms having more side surfaces, a cylinder, an elliptic cylinder, a column of an irregular shape whose section has a star shape, a heart shape, a clover shape, a spade shape or the like, and moreover, the shape may be a fusiform shape, a bell shape, a cigar shape, a beaded shape or the like. Any dimension may be also appropriate if a size thereof is within a range where eating can be enjoyed while holding one side with a hand.

### DESCRIPTION OF REFERENCE CHARACTERS

1, 10, 20: chocolate food item (stick chocolate)
2, 12, 22: first chocolate
3, 13: second chocolate
4, 14, 24: (portion defined in) inclined shape
5: pattern line
11, 21: shell chocolate
23: second sweet stuff material
25: spray chocolate
26: bottom chocolate
27: cover
30 : die
31: containing recess
31a: one end of containing recess
31b: other end of containing recess
32: pressing die

## Claims

1. A method for producing a bar- or stick-type food item (1), comprising steps of:
preparing (30) a die having an elongated containing recess (31) which has a bar or stick shape and an opened upper surface;
loading a first food item ingredient (2) which is viscous and mobile near one longitudinal end side of the containing recess (31) of the prepared die (30);
vibrating the die (30) to move the loaded first food item ingredient (2) from the one longitudinal end side of the containing recess to the other end side in an inclined shape;
filling a second food item ingredient (3) into an empty area of the containing recess (31) of the die (30) where the first food item ingredient (2) is not present; and
performing removal such that an upper surface of the second food item ingredient (3) is along the opened upper surface of the containing recess (31) so that the upper surface of the second food item ingredient (3) filled into the containing recess of the die is becomes flat.

2. A method for producing a bar- or stick-type food item according to claim 1, comprising a step of forming a shell (11) along an inner wall surface of the containing recess (31) before the first food item ingredient is loaded, or
instead of the step of removing, comprising steps of:
vibrating the die (30) to make flat the upper surface of the second food item ingredient after the second food item ingredient (3) is filled; and
covering the upper surface of the second food item ingredient (3) with a food item ingredient for forming the shell.

3. A method for producing a bar- or stick-type food item according to claim 1 or 2, further comprising a step of vibrating the die (30) to make flat the covering food item ingredient for forming a shell after being covered by the food item ingredient for forming the shell.

## Patentansprüche

1. Verfahren zum Herstellen eines Riegel- oder stangenartigen Lebensmittelartikels (1), mit den Schritten:
Vorbereiten (30) einer Form, die eine längliche Aufnahmevertiefung (31) aufweist, die eine Riegel- oder Stangenform hat und die eine offene obere Fläche aufweist;
Laden einer ersten Lebensmittelartikelzutat (2), die zähflüssig und mobil ist, in der Nähe von einer longitudinalen Endseite der Aufnahmevertiefung (31) der vorbereiteten Form (30);
Vibrieren der Form (30), um die geladene erste Lebensmittelartikelzutat (2) von der einen longitudinalen Endseite der Aufnahmevertiefung hin zu der anderen Endseite in einer geneigten Form zu bewegen;
Füllen einer zweiten Lebensmittelartikelzutat (3) in einen leeren Bereich der Aufnahmevertiefung (31) der Form (30), wo die erste Lebensmittelartikelzutat (2) nicht vorhanden ist; und
Durchführen einer Entnahme, derart, dass eine obere Fläche der zweiten Lebensmittelartikelzutat (3) sich entlang der offenen oberen Fläche der Aufnahmevertiefung (31) befindet, so dass die obere Fläche der zweiten Lebensmittelartikelzutat (3), die in die Aufnahmevertiefung der Form gefüllt ist, flach wird.

2. Verfahren zum Erzeugen eines riegel- oder stangenartigen Lebensmittelartikels gemäß Anspruch 1, mit einem Schritt, entlang einer inneren Wandfläche der Aufnahmevertiefung (31) eine Hülle (11) zu bilden, bevor die erste Lebensmittelartikelzutat geladen wird, oder
anstelle des Schrittes des Entnehmens, mit den Schritten:
Vibrieren der Form (30), um die obere Fläche der zweiten Lebensmittelartikelzutat flach zu machen, nachdem die zweite Lebensmittelartikelzutat (3) eingefüllt ist; und
Bedecken der oberen Fläche der zweiten Lebensmittelartikelzutat (3) mit einer Lebensmittelzutat zum Bilden der Hülle.

3. Verfahren zum Herstellen eines riegel- oder stangenartigen Lebensmittelartikels gemäß Anspruch 1 oder 2, ferner mit einem Schritt, die Form (30) zu vibrieren, um die abdeckende Lebensmittelartikelzutat zum Bilden einer Hülle flach zu machen, nachdem sie von der Lebensmittelartikelzutat zum Bilden der Hülle bedeckt worden ist.

## Revendications

1. Procédé de production d'un produit alimentaire (1) de type barre ou bâtonnet, comprenant les étapes consistant à :
préparer (30) une matrice comportant une cavité de réception (31) allongée qui présente une forme de barre ou de bâtonnet et une surface supérieure ouverte ;
introduire un premier ingrédient (2) de produit alimentaire qui est visqueux et mobile à proximité d'un côté d'extrémité longitudinal de la cavité de réception (31) de la matrice (30) préparée ;
faire vibrer la matrice (30) afin de déplacer le premier ingrédient (2) de produit alimentaire introduit du côté d'extrémité longitudinal de la cavité de réception à l'autre côté d'extrémité d'une manière inclinée ;
verser un second ingrédient (3) de produit alimentaire dans une région vide de la cavité de réception (31) de la matrice (30) dans laquelle le premier ingrédient (2) de produit alimentaire n'est pas présent ; et
procéder à un enlèvement de telle sorte qu'une surface supérieure du second ingrédient (3) de produit alimentaire soit située le long de la surface supérieure ouverte de la cavité de réception (31) afin que la surface supérieure du second ingrédient (3) de produit alimentaire versé dans la cavité de réception de la matrice soit aplanie.

2. Procédé de production d'un produit alimentaire de type barre ou bâtonnet selon la revendication 1, comprenant une étape consistant à former une coquille (11) le long d'une surface de paroi intérieure de la cavité de réception (31) avant que le premier ingrédient de produit alimentaire ne soit introduit, ou
au lieu de l'étape d'enlèvement, comprenant les étapes consistant à :
faire vibrer la matrice (30) de façon à aplanir la surface supérieure du second ingrédient de produit alimentaire après le versement du second ingrédient (3) de produit alimentaire ; et
recouvrir la surface supérieure du second ingrédient (3) de produit alimentaire avec un ingrédient de produit alimentaire destiné à former la coquille.

3. Procédé de production d'un produit alimentaire de type barre ou bâtonnet selon la revendication 1 ou 2, comprenant en outre une étape consistant à faire vibrer la matrice (30) de façon à aplanir l'ingrédient de produit alimentaire de recouvrement destiné à former une coquille après le recouvrement par l'ingrédient de produit alimentaire destiné à former la coquille.
